# EUROPEAN PATENT APPLICATION

(11) **EP 2 891 972 A1**
(43) Date of publication of application: **08.07.2015**
(21) Application number: 14197131.7
(22) Date of filing: 10.12.2014
(51) Int. Cl.: G06F 3/12, H04N 1/00

(54) **Printer interface analysis device**

(30) Priority: 10.12.2013 PT 0107348
(71) Applicant: Escrita Inteligente, LDA, 8300-164 Silves (PT)
(72) Inventor: Cabrito Nunes Cabaço, José Miguel, 1600-210 Lisboa (PT); Marques Santos, Rui Jorge, 2530-106 Lourinhã (PT); Cordovil Da Silva Cordeiro, Diogo, 1170-353 Lisboa (PT)
(74) Representative: Ferreira, Maria Silvina

(57) **Abstract**

The present application discloses a device to monitor a printing device and aims to a way of collecting printable data from Software Emitter Systems (101). This device is interoperable with common software and hardware appliances that output a Printed Document choice (106).

Disclosed is a printer interface monitoring device comprising a user interface (103), a network connection, a connection to a printing device (105) Input-Output port, and a data processing module (102). The user interface (103) allows choosing the Cloned Document choice and upload action (104). The network connection is possibly connected to Internet Services (107). The data processing module is configure to capture data from raw data transmitted to the printing device Input-Output port, produce a digital clone of the intended physical document, present a multiple-choice screen on the user interface and transmit data through the network connection to Main Repositories (108) and/or End-user local repository (109).

## Description

### Technical field

The present application is in the field of monitoring printer interfaces.

### Background

The daily generation of millions of printed receipts resulting from commercial and non-commercial transactions and procedures represents a global issue that directly impacts on the environment and on our natural resources. Our invention can drastically reduce this impact by converting physical, paper-consuming, waste-generating printed documents into digitally-converted documents that can be easily consulted and managed.

All software and hardware appliances that finish a transaction with a printed document such as a POS, ATM and similar equipment produce a large amount of documents that are physically printed on paper. This approach has a large footprint because it expends a lot of paper, thus creating a huge amount of unnecessary waste. It also creates a chaotic situation regarding document management and maintenance.

The main printing technologies used in the above-mentioned appliances are thermal and impact printing, which do not guarantee a long-lasting visualization of the printed document. As a precaution, the document is usually copied using a more redundant and time-lasting printing technology, such as laser printing, generating even more waste and paper expense.

Another relevant issue is the correct archive of the physical documents, many of which are lost or destroyed, with irretrievable loss of all the information included.

Document US 6980312 B1 discloses a multifunction device that includes a controller, a first interface for receiving input data from a document data source and a second interface for outputting processed input data to a printer, and a touch screen that implements a graphical user interface for controlling the operation of the device. The device includes control over setting operational parameters and selecting a mode of operation. A further interface is provided for outputting processed document data to an e-mail port. This document discloses a device that acts as a printer server gateway and the main feature is to route printing jobs to several repositories, as a documental management agent, but it does not disclose a device that acts at a more low hardware level, that is not limited to network printing, that interacts with a flavor-wide Input-Output (IO) interface, that is not limited to third-party printing technologies, that has a data processing module that adds to the captured printed document important information for triage, complex queries and human readable information, and, does not disclose a device that is capable of promoting automatic actions at a given printed document with or without human decision.

Document WO 2013141413 A1 discloses a mobile printing system for printing electronic document data. The system comprises a mobile cellular device in communication with a printer and including a network module and a removable storage media. The network module identifies the mobile cellular device in a cellular network as an electronic storage device for receipt of electronic print data, said electronic print data being converted to an electronic print document by the mobile cellular device for transmission and printing by the printer. This document discloses a device that acts as a printer with a storage device attached, but does not disclose a device that is an abstract layer for third-party printing technologies, that has more than one mean of data transmission, that has a data processing module that adds to the captured printed document important information for triage, complex queries, human readable information, and, does not disclose a device that is capable of promoting automatic actions at a given printed document with or without human decision.

### Summary

It is disclosed a device comprising a user interface, a network connection and a connection to the communication means of a printing device.

An embodiment comprises a connection with at least one emitting system.

A method is also disclosed that comprises the steps of capturing data from the communication means of a printing device, present a multiple-choice screen to the system operator, and transmitting data through the network connection.

An embodiment comprises a method that transmits a printing operation to the connection means of a printing device.

### Brief description

The present application discloses a device to monitor a printing device and aims to a more secure, organized and efficient way of collecting printable data. This device is interoperable with common software and hardware appliances that output a printed document.

The device hereby disclosed is an agnostic digital printing solution coupled with decision algorithms that can:
1) capture and process raw data from the communication means of a printing device, producing a digital clone of the intended physical document;
2) present a multiple-choice screen to the system operator where delivery methods of the digitalized document can be chosen;
3) distribute the copied document to the recipient by using a local or remote repository.

The device captures raw data from the communication means of a printing device in order to parse the information transmitted to the printing device.

### Description of drawings

For an easier understanding of the present application, drawings are attached that represent preferred embodiments which, however, are not intended to limit the subject matter of this application.

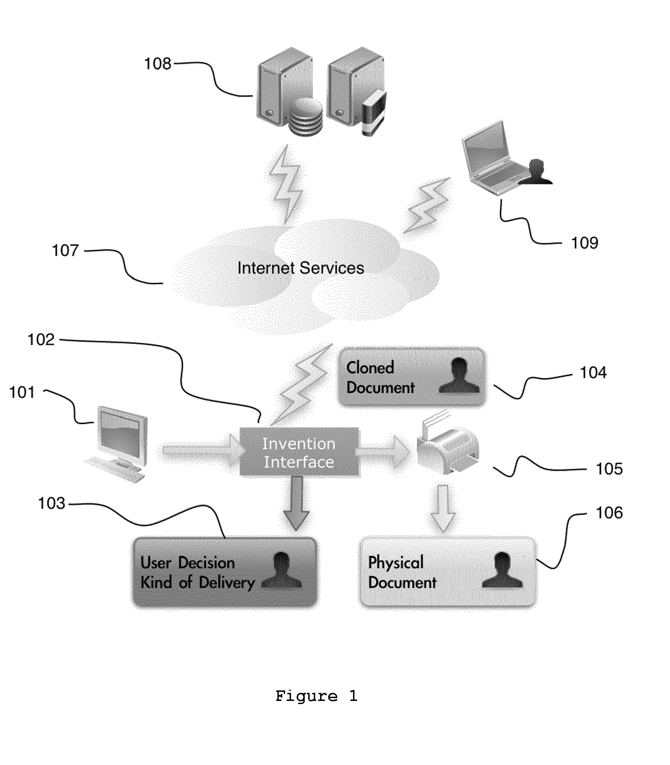

**Figure 1** illustrates one embodiment, where the reference numbers are:
   101 - Software Emitter System;
   102 - Invention interface;
   103 - User interface;
   104 - Cloned Document choice and upload action;
   105 - Printer Device;
   106 - Printed Document choice;
   107 - Internet Services;
   108 - Main Repositories; and
   109 - End-user local repository.

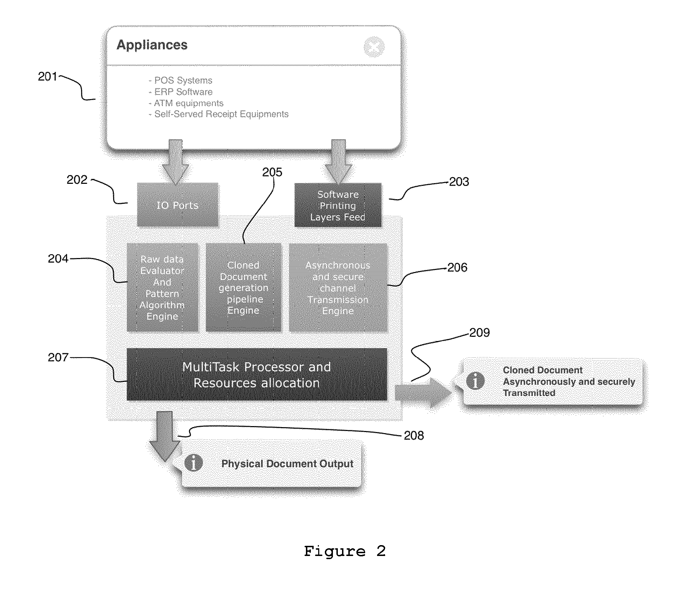

**Figure 2** illustrates the architecture, where the reference numbers are:
   201 - Software and Hardware Appliances;
   202 - Input/output Ports;
   203 - Software Printing Layers;
   204 - Raw data parser engine;
   205 - Printing and layout cloning engine;
   206 - Transmission engine and secure transaction engine;
   207 - Thread management and resource allocation layer;
   208 - Physical output for printer device; and
   209 - Virtual output for digitalized cloned document.

### Description of preferred embodiments

The present application discloses a device that acts between an emitting system and a printing device. The device collects raw binary data directly from the communication means of the printing device.

In one embodiment, the device can interoperate with several types of communication means of the printing device. Common physical interfaces used to communicate with printing devices are: Serial Port - RS232; USB; Parallel Ports; and LAN ports. Furthermore, common software printing layers are: OPOS printer subset; Microsoft print spooler service; Common Unix Printing System (CUPS); Internet Printing Protocol (IPP); POS.NET printer subset; and Linux Printing Daemon Queue (LPD).

The device is connected to the printing device connection means. In one embodiment, communications between printing systems and the printing device are tunneled through the device, providing a position of total control over what is transmitted to the printing device.

When a printing operation is transmitted to the Input-Output (IO) port used to communicate with a printing device, the raw data transmitted is captured and analyzed, producing a digital clone of the intended physical document. In one embodiment, the resulting copy is provisionally stored locally on the device's memory.

In one embodiment, the device presents a multiple-choice screen to the system operator after parsing the document, where delivery methods of the digitalized document can be chosen, distributing it to the recipient by using a local or remote repository.

The repository nature comprises Cloud Storage Services, Mobile Cloud Backend, Database Driven Repositories and/or local storage on the recipient's device(s).

In another embodiment, the device has pre-configured automatic actions that occur to the cloned information, for example: sending the document to a remote centralized backup system or converting the information to another format.

Though specific embodiments of the invention have been described and illustrated, the invention is not to be limited to the specific forms or arrangements of parts so described and illustrated. The scope of the invention is to be defined by the claims and their equivalents to be included by reference in a non-provisional patent application.

### Acronyms list

POS - Point Of Sale or Point Of Service
ERP - Enterprise Resource Planning
ATM - Automatic Teller Machine
API - Application Programming Interface
IO - Input/ Output
OCR - Optical Character Recognition
USB - Universal Serial Bus
LAN - Local Area Network
OPOS - Object Linking and Embedding for Retail Point Of Sales
CUPS - Common Unix Printing System
IPP - Internet Printing Protocol
POS.NET - Class library that is part of Microsoft Windows Embedded for Point of Service
LPD - Linux Printing Daemon Queue

The above described embodiments are combinable.
Lisbon, December 10, 2014

## Claims

1. Method of operating a printer interface monitoring device, comprising the following steps:
- capturing raw data transmitted to the printing device Input-Output port;
- producing a digital clone of the intended physical document from a software printing layer;
- present a multiple-choice screen on the user interface; and
- transmitting data through the network connection.

2. Method according to the previous claim, wherein the step of producing a digital clone of the intended physical document in a software printing layer, comprises at least one of the following software printing layers:
- OPOS printer subset;
- Microsoft print spooler service;
- Common Unix Printing System (CUPS);
- Internet Printing Protocol (IPP);
- POS.NET printer subset; and
- Linux Printing Daemon Queue (LPD).

3. Method according to any of the previous claims, further comprising provisionally storing the digital clone of the intended physical document in a storage memory.

4. Method according to any of the previous claims, further comprising transmitting a printing operation to the printing device Input-Output port.

5. Method according to any of the previous claims, further comprising converting the cloned information to another format.

6. Printer interface monitoring device, comprising:
- a user interface;
- a network connection;
- a connection to a printing device Input-Output port; and
- a data processing module, configure to implemented the method described in any of the claims 1 to 5.

7. Device according to the previous claim, further comprising a connection with at least one emitting system.

8. Device according to any of the previous claims 6 to 7, wherein the connection to the printing device Input-Output port is one of:
- Serial Port - RS232;
- USB;
- Parallel Ports;
- LAN ports.

9. Device according to any of the previous claims 6 to 8, further comprising a storage memory.

10. Device according to any of the previous claims 6 to 9, wherein the user interface is configured to present a multiple-choice screen of at least one of the following delivery methods:
- Cloud Storage Services;
- Mobile Cloud Backend;
- Database Driven Repositories; and/or
- local storage on a recipient's device.
